Europäisches Patentamt

European Patent Office

Office européen des brevets

(19)

(11) Numéro de publication: **0 044 064**
**B1**

(12) **FASCICULE DE BREVET EUROPEEN**

(45) Date de publication du fascicule du brevet: **03.10.84**

(21) Numéro de dépôt: **81105461.8**

(22) Date de dépôt: **13.07.81**

(51) Int. Cl.³: **A 22 C 9/00**

(54) **Attendrisseur de viande.**

(30) Priorité: **11.07.80 CA 356070**

(43) Date de publication de la demande:
**20.01.82 Bulletin 82/03**

(45) Mention de la délivrance du brevet:
**03.10.84 Bulletin 84/40**

(84) Etats contractants désignés:
**AT BE CH DE FR GB IT LI LU NL SE**

(56) Documents cités:
**US-A-1 376 585**
**US-A-1 452 098**
**US-A-1 589 084**
**US-A-1 976 751**
**US-A-1 991 439**
**US-A-2 008 326**
**US-A-4 085 482**

(73) Titulaire: **FORMALEX INC.**
**2650 ouest, rue King**
**Sherbrooke Quebec, J1J 2H1 (CA)**

(72) Inventeur: **Charron, Gérard**
**232 rue Lachapelle**
**Sherbrooke Québec (CA)**

(74) Mandataire: **May, Hans Ulrich**
**Thierschstrasse 27**
**D-8000 München 22 (DE)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Description

La présente invention a trait à un appareil pour attendrir les tranches de viande, telles que les tranches de boeuf, et qui est particulièrement adapté pour usage domestique.

L'appareil selon la présente invention est une amélioration de l'appareil décrit dans le brevet américain numéro 4,085,482 daté du 25 avril 1978, au nom du même inventeur. Ce brevet décrit une disposition particulière des dents à viande sur les rouleaux de façon à former plusieurs groupes de dents à viande qui coopèrent pour comprimer et cisailler la viande, les groupes étant espacés longitudinalement de façon à former une cavité à chaque bout de chaque groupe dans laquelle la viande n'est pas soumise à un effet de compression et le sang contenu dans la viande est expulsé de la partie comprimée vers la partie non comprimée de la viande. De cette façon, la viande peut être attendrie sans qu'elle perde son sang. Dans ce brevet, l'on décrit des roues d'engrenage à un bout des deux rouleaux qui s'engrènent pour faire tourner les deux rouleaux en sens inverse et maintenir les dents à viande des deux rouleaux dans la position angulaire relative requise. Cependant les rouleaux doivent être fréquemment enlevés pour être lavés et il arrive souvent qu'en remettant les rouleaux en place dans l'appareil, la position, angulaire relative des rouleaux n'est pas respectée. Dans ce cas, les dents à viande des rangées longitudinales voisines bouchent partiellement les cavités, et ceci empêche d'obtenir l'effet désiré, à savoir non comprimer la partie de la viande immédiatement au voisinage des groupes de deux dents à viande qui effectuent la compression et le cisaillement.

Le but général de la présente invention est donc de prévoir un appareil pour attendrir les tranches de viande du type décrit dans le brevet américain du demandeur, numéro 4,085,482 daté du 25 avril 1978, dans lequel les roues d'engrenage qui entraînent les deux rouleaux en contre-rotation sont agencées de façon à toujours maintenir les dents à viande des deux rouleaux dans leur position angulaire requise pour effectuer le travail désiré.

Un autre but de l'invention consiste à prévoir des roues d'engrenage dont celles de l'un des rouleaux servent également à attendrir la viande en collaboration avec les dents à viande de l'autre rouleau, de façon à pouvoir attendrir des tranches de viande de largeur maximum par rapport à la longueur des rouleaux.

Un autre but de l'invention est de prévoir des rouleaux pour attendrisseur à viande dans lesquels les roues d'engrenage sont intégrales aux rouleaux et ne forment aucune rainure ou cavité qui serait difficile à nettoyer.

Un autre but de l'invention consiste à prévoir un appareil pour attendrir des tranches de viande, qui est facile à utiliser et qui comporte des moyens de sécurité pour empêcher tout accident, spécialement dans le cas où des enfants pourraient s'en servir.

Les buts qui précèdent et d'autres buts de l'invention vont devenir plus clairs en se référant à la description qui suit et aux dessins annexés, dans lesquels:

la figure 1 est une vue en perspective de l'attendrisseur à viande selon la présente invention, le couvercle étant ouvert pour montrer la position des rouleaux;

la figure 2 est une vue en perspective de l'appareil en position de travail;

la figure 3 est une coupe partielle transversale de l'appareil montré en position de travail;

la figure 4 est une vue en plan partielle de la paire de rouleaux en position de travail;

la figure 5 est une vue en bout de la paire de rouleaux montrant les roues d'engrenage;

la figure 6 est une coupe transversale de la paire de rouleaux;

la figure 7 est une vue en bout de la paire de rouleaux montrant les bouts opposés aux roues d'engrenage;

la figure 8 est une coupe longitudinale partielle de la paire de rouleaux prise selon un plan passant par les deux axes des rouleaux; et

la figure 9 est une vue en perspective partielle des deux rouleaux.

Dans la description qui suit, les mêmes chiffres de référence indiquent les mêmes éléments.

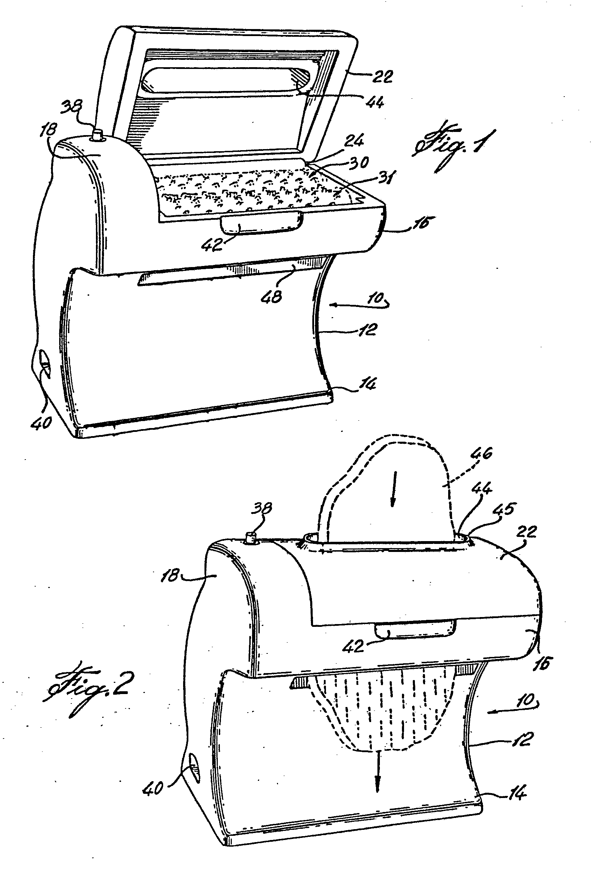

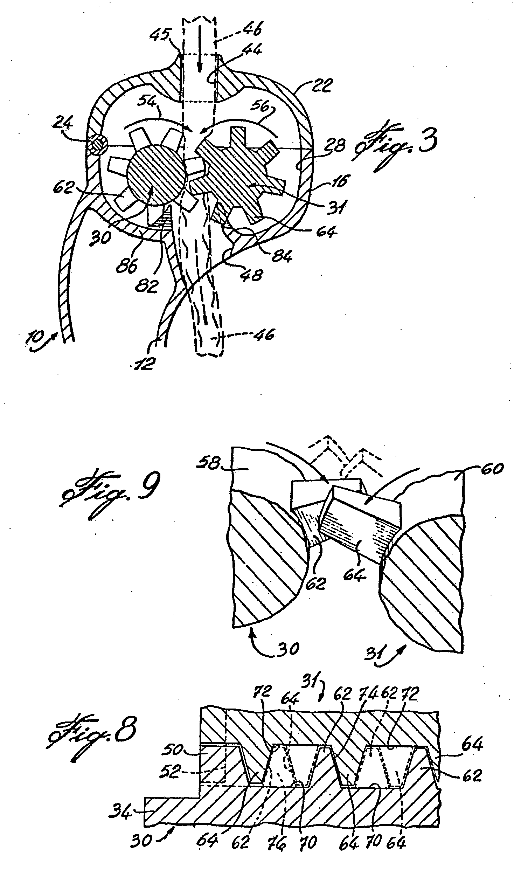

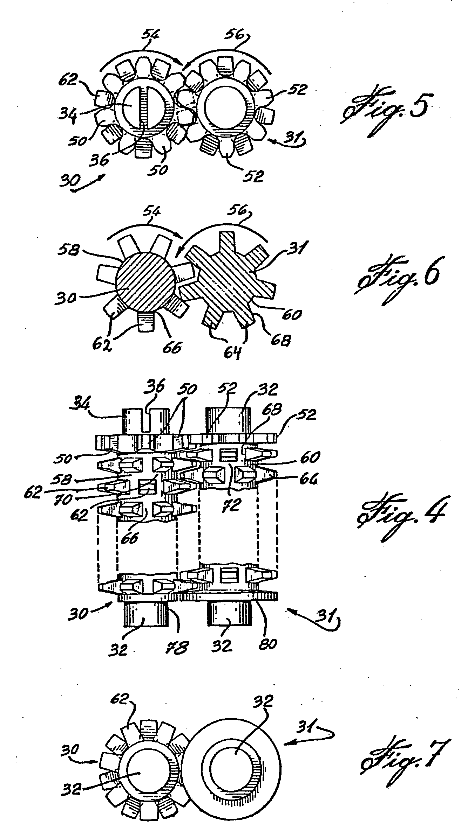

L'appareil, selon l'invention, comporte un boîtier 10 destiné à être mis sur un comptoir ou une table et incluant un pied 12, ayant une base 14 élargie, et surmonté d'une tête élargie 16. La tête 16 forme à un bout un compartiment fermé 18, tandis que le reste de la tête est muni d'un couvercle 22 pivoté à l'arrière du boîtier par la penture 24 (voir la figure 3). Lorsque le couvercle 22 est fermé, comme montré à la figure 2, il forme une continuation du compartiment 18. Le couvercle étant fermé, il est donc défini une cavité 28 à l'intérieur de la tête du boîtier, dans laquelle sont disposés une paire de rouleaux attrendrisseurs selon l'invention et généralement indiqués en 30 et 31. Les deux rouleaux sont disposés côte à côte longitudinalement de la tête 16 et peuvent être enlevés facilement de celle-ci pour nettoyage lorsque le couvercle 22 est ouvert. Comme montré à la figure 4, il y a un rouleau entraîneur 30 et un rouleau entraîné 31. Les deux rouleaux sont pourvus à leur bout d'extensions cylindriques 32 et 34. Les trois extensions 32 sont pleines, tandis que l'extension 34 du rouleau entraîneur 30 est pourvue d'une fente diamétrale 36. Les extensions 32, 34 reposent tout simplement dans le fond de cavités semi-cylindriques, faites dans la tête 16, et la fente 36 engage une lame, non montrée, qui est entraînée en rotation par un moteur électrique logé dans le boîtier 10. Ce moteur électrique est contrôlé par un interrupteur à bouton poussoir, indiqué en 38, qui est relié à son tour en série dans le circuit électrique du moteur à un deuxième interrupteur logé sous l'extension 34, et qui se ferme lorsque cette extension 34 est poussée vers le bas par le bord inférieur du couvercle 22 lorsque celui-ci est fermé. Ceci constitue une première sécurité en ce que les rouleaux ne peuvent etre mis en rotation que lorsque le couvercle 22 est fermé.

Le côté du pied 12 est pourvu d'une cavité 40 pour y insérer la fiche d'un fil électrique qui sert à alimenter le moteur en courant. Le couvercle est maintenu fermé par une barrure (non montrée) qui peut être relâchée en pesant sur le fond de la partie en retrait 42, dont la paroi est mince et légèrement flexible.

Le couvercle est pourvu d'une fente 44 qui est en alignement avec le joint fait par les deux rouleaux. Cette fente sert à insérer la tranche de viande 46 à être attendrie. La fente 44 est munie d'une lèvre 45 sur son pour tour, qui empêche les doigts des enfants d'atteindre les rouleaux 30, 31. Cette tranche 46 passe entre les deux rouleaux et est entraînée vers le base par le contre-rotation de ceux-ci pour être expulsée du boîtier par une fente 48 qui s'ouvre à la base de la tête 16 et juste en avant du pied 12.

Les deux rouleaux 30 et 31 sont de préférence chacun moulé en une seule pièce d'un matériau qui se lave facilement, tel que la résine synthétique, connue sous la marque de commerce "DELRIN", appartenant à la société Du Pont.

Le rouleau entraîneur 30 est pourvu, juste en-deçà de son extension 34 comportant la fente 36, d'une roue d'engrenage moulée intégralement au rouleau et qui comporte des dents d'engrenage 50, toutes également espacées autour du rouleau. De la même façon le rouleau entraîné 31 est pourvu à un bout d'une roue d'engrenage constituée de dents d'engrenage également espacées, indiquées en 52, mais beaucoup plus minces que les dents 50, comme montré à la figure 4. Les dents 50 et 52 s'engrènent de façon que, lorsque le rouleau entraîneur 30 tourne selon la flèche 54 montrée à la figure 6, le rouleau entraîné 31 tourne dans le sens contraire selon la flèche 56 de la même figure. Les deux rouleaux sont chacun pourvus sur toute leur surface périphérique 58 et 60 respectivement de dents à viande 62 et 64, c'est-à-dire de dents servant à attendrir la viande et qui sont toutes de forme identique et font saillie radialement des surfaces 58 et 60. Chaque dent 62 et 64 a un profil rectangulaire et est de forme trapézoïdale, la grande base coïncidant avec la surface périphérique 58 ou 60. Les dents 62 et 64 sont disposées sur chaque rouleau en rangées annulaires et en rangées longitudinales, c'est-à-dire en rangées selon le sens axial du rouleau. Les dents de chaque rangée annulaire sont également espacées et, donc, laissent entre elles un espace inter-dents, indiqué en 66 et en 68 respectivement. Chaque rangée annulaire de dents est espacée de la rangée annulaire voisine par un espace annulaire libre, indiqué en 70 et en 72 respectivement. Ces espaces libres servent à recevoir les dents de l'autre rouleau.

Les dents à viande de n'importe quelle rangée annulaire sur chaque rouleau sont décalées angulairement d'un demi-pas par rapport aux dents à viande de la rangée annulaire voisine, de sorte que les dents de n'importe quelle rangée annulaire sont vis-à-vis de l'espace inter-dents des deux rangées annulaires voisines. Les dents à viande sur chaque rouleau sont donc disposées en quinconce et chaque rangée longitudinale de dents comporte une dent de chaque deuxième rangée annulaire seulement.

Lorsque les deux rouleaux sont en position de travail, comme montré à la figure 4, et que les dents à viande s'engrènent, les dents d'un rouleau sont décalées longitudinalement par rapport aux dents de l'autre rouleau, de sorte que les dents de chaque rouleau engagent l'espace annulaire libre 70 ou 72 de l'autre rouleau.

Lorsque les dents à viande des deux rouleaux viennent en position maximum d'engrenage, c'est-à-dire lorsqu'une rangée longitudinale de dents de l'une des rouleaux est alignée avec l'axe de l'autre rouleau, et vice versa, l'on obtient l'arrangement montré en coupe diamétrale à la figure 8. Chaque dent 62 ainsi alignée du rouleau entraîneur 30 forme une paire avec la dent 64 du rouleau entraîné 31; les dents de chaque paire sont décalées longitudinalement mais laissent un léger espace 74 pour le cisaillement et la compression de la viande. Chaque paire de dents est espacée de la paire de dents voisine par un espace libre ou cavité 76, constitué par l'espace inter-dents 66 ou 68 et par l'espace annulaire libre 70 ou 72. Cette cavité 76 est plus longue dans le sens axial du rouleau 30 ou 31 que l'épaisseur d'une dent à viande 62 ou 64. Donc, le sang contenu dans la viande qui est cisaillée et compressée par une paire de dents n'est pas rejeté à l'extérieur de la viande mais est tout simplement expulsé à l'intérieur de la portion de la viande non compressée qui est logée dans la cavité 76. Donc, la tranche de viande qui est attendrie ne perd pas son sang et est bien meilleure au goût que si elle avait été traitée par des attendrisseurs conventionnels.

Il est très important de laisseur les cavités 76 complètement libres au moment où les dents des deux rouleaux s'engrènent complétement pour obtenir le résultat précité. Si les dents d'un rouleau sont décalées angulairement par rapport à l'axe de l'autre rouleau, au moment de l'engagement maximum des dents de ce dernier rouleau, alors les cavités décrites deviennent partiellement bloquées par les dents de rangées annulaires voisines.

Selon la caractéristique principale de la présente invention, les roues d'engrenage comportent un nombre de dents d'engrenage 50 et 52 égal au nombre de dents à viande par rangée annulaire; en d'autres termes, le pas des dents d'engrenage est égal au pas des rangées annulaires de dents à viande. Dans ces conditions, l'on obtient toujours que les dents à viande des deux rouleaux s'engrènent correctement, même si l'on ne fait pas particulièrement attention à la position angulaire des rouleaux lorsqu'on les place dans le boîtier après lavage.

Selon une autre caractéristique les dents d'engrenage 50 du rouleau entraîneur sont plus épaisses que les dents d'engrenage 52 du rouleau entraîné, de sorte qu'elles aussi servent de dents à attendrir la viande en collaboration avec la rangée annulaire de dents du rouleau entraîné voisine des dents d'engrenage 52. Afin d'employer les dents 50 également comme dents à attendrir la viande, il est à noter que ces dents d'engrenage 50 sont alignées longitudinalement du rouleau 30 avec la deuxième rangée annulaire de dents 62, de manière à laisser une cavité 76 pour la non-compression de la viande. De la même façon, les dents d'engrenage 52 du rouleau entraîné 31 sont alignées longitudinalement avec la deuxième rangée annulaire de dents 64 du rouleau 31. De préférence, les dents d'engrenage sont légèrement plus longues que les dents à viande, de sorte qu'en collaboration avec les anneaux 78 et 80 faisant saillie à l'autre bout des deux rouleaux 30 et 31, elles maintiennent le bout des dents à viande légèrement espacé de la surface périphérique 58 et 60, respectivement, des deux rouleaux lorsque les dents à viande d'un rouleau sont alignées avec l'axe du rouleau voisin. Les deux anneaux 78 et 80 font contact à leur périphérie; l'anneau 78 du rouleau entraîneur 30 à un moins grand diamètre que l'anneau 80. Le dernière rangée de dents à viande 62 du rouleau 30 est adjacente à l'anneau 78, tandis qu'il y a un espace annulaire libre 72 entre l'anneau 80 et la dernière rangée annulaire de dents 64 du rouleau 31. De cette façon, en combinaison avec les dents d'engrenage 50 qui servent également comme dents à viande, l'on obtient le traitement de la viande sur une largeur maximum de la tranche comparativement à la longueur des rouleaux.

En se référant à la figure 3, l'on voit que le boîtier, plus particulièrement la tête 16, forme des dents de peigne 82 et 84, qui engagent les espaces annulaires 70 et 72 de chaque rouleau et qui empêchent tous débris de viande d'être entraînés en rotation par les rouleaux respectifs. Les dents de peigne 82 sont formées intégralement avec une paroi 86 qui ferme le haut du pied du boîtier et ainsi empêche tous débris de viande de tomber à l'intérieur du pied.

Precis de la divulgation

L'on décrit un appareil pour attendrir des tranches de viande, telle que le boeuf, comportant une paire de rouleaux cylindriques de diamètres égaux, disposés côte à côte, et tournant en sens inverse, et munis de dents à viande qui s'engrènent. La tranche de viande passe entre les deux rouleaux et est soumise à l'action des dents à viande. L'attendrisseur est caractérisé par la disposition particulière des dents à viande sur les deux rouleaux en combinaison avec des roues d'engrenage montées à un bout des rouleaux et s'engrenant de façon à ce que les dents à viande soient toujours dans leur position angulaire précise pour effectuer le travaile désiré. Les dents à viande sont uniformément réparties et disposées en quinconce sur chaque rouleau. Plus particulièrement, les dents à viande sont disposées en rangées annulaires et l'espace interdents dans chaque rangée est égal. Il y a une zone annulaire libre entre chaque rangée annulaire. Les dents à viande de chaque deuxième rangée sont alignées dans le sens axial du rouleu. Les dents à viande de n'importe quelle rangée annulaire sont décalées angulairement d'un demi- pas par rapport aux dents à viande de la rangée voisine, de sorte qu'elles sont alignées avec les espaces interdents de cette rangée annulaire voisine; les dents à viande des deux rouleaux s'engrènent de telle façon que, lorsque les dents à viande d'une rangée longitudinale de chaque rouleau sont alignées radialement avec l'axe de l'autre rouleau, les dents à viande des deux rouleaux ainsi alignées forment plusieurs groupes de deux dents à viande qui coopèrent pour comprimer et cisailler la viande, chaque groupe étant espacé longitudinalement de façon à former une cavité à chaque bout de chaque groupe dans lequel la viande n'est pas soumise à un effet de compression, et le sang contenu dans la viande est expulsé de la partie comprimée vers la partie non comprimée de la viande. De cette façon, la viande peut être attendrie sans qu'elle perde son sang. Chaque roue d'engrenage a autant de dents que le nombre de dents à viande dans chaque rangée annulaire, et les dents des engrenages sont alignées avec les rangées longitudinales des dents à viande. De cette façon, les engrenages assurent toujours que les deux rouleaux soient dans leur position angulaire désirée, même si les rouleaux sont enlevés pour nettoyage.

**Revendications**

1. Un appareil pour attendrir les tranches de viande comportant une paire de rouleaux cylindriques (30, 31) de diamètres égaux, disposés l'un à côté de l'autre et chacun muni d'une roue d'engrenage à un bout s'engrenant l'une avec l'autre et de diamètres égaux, de sorte que les deux rouleaux (30, 31) tournent en direction inverse et à la même vitesse, chaque rouleau (30, 31) étant muni de dents à viande (62, 64) similaires et de même pas faisant saillie radialement de la surface périphérique (58, 60) du rouleau (30, 31) substantiellement sur toute la longueur de celui-ci, ces dents à viande (62, 64) étant disposées en plusieurs rangées annulaires et, dans chaque rangée annulaire, lesdites dents à viande (62, 64) étant séparées par des espaces interdents (66, 68) égaux dont le fond est défini par une portion de ladite surface périphérique (58, 60), lesdites rangées annulaires étant également espacées les unes des autres dans le sens axial des rouleaux (30, 31) pour définir entre elles des espaces annulaires libres (70, 72), les dents à viande (62, 64) de chaque rangée annulaire respectivement d'ordre pair ou alternativement d'ordre impair de chaque rouleau (30, 31) étant alignées entre elles dans le sens axial du rouleau (30, 31) et les dents à viande (62, 64) sur chaque rouleau (30, 31) étant disposées en quinconce de telle sorte que celles d'une rangée annulaire sont, toujours dans le sens axial du rouleau, (30, 31) disposées vis-à-vis de l'espace interdent (66, 68) de chaque rangée annulaire voisine, et l'engrenement entre les rouleaux (30, 31) étant tel que les dents à viande (62, 64) d'un rouleau (30, 31) sont décalées longitudinalement par rapport aux dents à viande (62, 64) de l'autre rouleau (30, 31), de sorte que, dans la position maximum d'engrenage des rouleaux (30, 31) entre eux, chaque dent à viande (62, 64) de la rangée longitudinale d'un rouleau (30, 31) située dans cette position maximum engage complètement la partie en vis-à-vis d'un espace annulaire libre (70, 72) de l'autre rouleau, ces deux dents à viande (62, 64) formant ainsi une paire de dents à viande (62, 64), qui est espacée de la paire de dents à viande (62, 64) voisine, similairement formée, par une cavité (76) réalisée par l'espace annulaire libre (70, 72) adjacent des dents à viande (62, 64) des rangées annulaires intermédiaires, qui ne sont pas encore en position maximum d'engrenage, ladite cavité (76) étant plus longue dans le sens axial du rouleau (30, 31) que l'épaisseur d'une dent à viande (62, 64), caractérisée en ce que chaque roue d'engrenage a des dents d'engrenage (50, 52) dont le pas est égal au pas des dents à viande (62, 64) d'un rangée annulaire de chaque rouleau (30, 31) de sorte qu'automatiquement une rangée longitudinale de dents à viande (62, 64) d'un rouleau (30, 31) est alignée avec une rangée longitudinale de dents à viande (62, 64) de l'autre rouleau (30, 31), lorsque ces rangées arrivent dans la position maximum d'engrenage.

2. Un appareil tel que revendiqué dans la revendication 1, dans lequel l'un des rouleaux est un rouleau entraîneur (30) et l'autre un rouleau entraîné (31), le rouleau entraîneur ayant à son bout une fente diamétrale (36) pour recevoir un axe moteur à bout plat.

3. Un appareil tel que revendiqué dans la revendication 1, dans lequel les dents d'engrenage (50) de l'un des deux rouleaux (30) sont plus épaisses que les dents d'engrenage (52) de l'autre rouleau (31) et collaborent avec la première rangée annulaire de dents à viande (64) de cet autre rouleau pour servir de dents à viande.

4. Un appareil tel que revendiqué dans la revendication 3, dans lequel les dents d'engrenage (50, 52) de chacun des deux rouleaux (30, 31) sont alignées axialement du rouleau avec les dents ci viande (62, 64) de la deuxième rangée annulaire du rouleau à partir desdites dents d'engrenage.

5. Un appareil tel que revendiqué dans la revendication 4, dans lequel les bouts de chaque rouleau (30, 31) opposés auxdites roues d'engrenage (50, 52) sont munis d'un anneau (78, 80) qui fait chacun contact avec l'autre à leur périphérie et collaborant avec lesdites roues d'engrenage pour maintenir le bout externe des dents à viande (62, 64) dirigées vers l'axe de l'autre rouleau, légèrement espacé de la surface périphérique (58, 60) de cet autre rouleau.

6. Un appareil tel que revendiqué dans la revendication 5, dans lequel l'un des rouleaux est un rouleau entraîneur (30), et l'autre un rouleau entraîné (31) et chaque rouleau est muni à son bout d'une extension cylindrique (32, 34) se prolongeant vers l'extérieur à partir des roues d'engrenage et desdits anneaux (78, 80) respectivement, l'anneau (78) dudit rouleau entraîneur étant de plus petit diamètre que l'anneau (80) du rouleau entraîné, chaque anneau faisant contact périphérique avec l'autre, l'anneau du rouleau entraîneur étant immédiatement voisin de la dernière rangée annulaire de dents à viande (62) du rouleau entraîneur, tandis que l'anneau du rouleau entraîné est espacé axialement, par un espace annulaire libre (72), de la dernière rangée annulaire de dents à viande (64) du rouleau entraîné.

**Patentansprüche**

1. Fleischmürbemaschine zum Mürben von Fleischscheiben, welche ein Paar zylindrischer Walzen (30, 31) von gleichen Durchmessern aufweist, die nebeneinander angeordnet und jede an einem Ende mit einem Zahnrad versehen sind, wobei die Zahnräder gleiche Durchmesser haben und miteinander kämmen, so daß die zwei Walzen (30, 31) sich in Richtung gegeneinander und mit der gleichen Geschwindigkeit drehen, wobei jede Walse (30, 31) mit ähnlichen Fleischmürbezähnen (62, 64) von gleichem Schritt versehen ist, die radial von der Umfangsfläche (58, 60) der Walze (30, 31) im wesentlichen über deren gesamte Länge vorstehen, wobei diese Fleischmürbezähne (62, 64) in mehreren Ringreihen angeordnet sind und in jeder Ringreihe die Fleischmürbezähne (62, 64) durch gleiche Zahnzwischenräume (66, 68) getrennt sind, deren Boden von einem Teil der Umfangsfläche (58, 60) begrenzt ist, wobei die Ringreihen in gleichmäßigem Abstand voneinander in der axialen Richtung der Walzen (30, 31) angeordnet sind, so daß sie zwischen sich freie Ringräume (70, 72) begrenzen, wobei die Fleischmürbezähne (62, 64) jeder Ringreihe jeweils gerader oder alternativ ungerader Ordnungszahl jeder Walze (30, 31) unter sich in der axialen Richtung der Walze (30, 31) ausgerichtet sind und die Fleischmürbezähne (62, 64) jeder Walze (30, 31) im Zickzack so angeordnet sind, daß diese Zähne einer Ringreihe stets in der axialen Richtung der Walze (30, 31) gegenüber den Zahnzwischenraum (66, 68) jeder benachbarten Ringreihe angeordnet sind und der Eingriff zwischen den Walzen (30, 31) so ist, daß die Fleischmürbezähne (62, 64) einer Walze (30, 31) in Längsrichtung bezüglich der Fleischmürbezähne (62, 64) der anderen Walze (30, 31) so versetzt sind, daß in der Stellung des maximalen Eingriffs der Walzen (30, 31) miteinander jeder Fleischmürbezahn (62, 64) der Längsreihe einer Walze (30, 31), der sich in dieser maximalen Eingriffsstellung befindet, vollständig den gegenüber liegenden Teil eines freien Ringraums (70, 72) der anderen Walze besetzt, so daß diese zwei Fleischmürbezähne (62, 64) ein Paar von Fleischmürbezähnen (62, 64) bilden, das vom benachbarten ähnlich geformten Paar von Fleischmürbezähnen (62, 64) durch einen Hohlraum (76) getrennt ist, der durch den freien Ringraum (70, 72) gebildet wird, der den Fleischmürbezähnen (62, 64) der dazwischen liegenden Ringreihen, die sich noch nicht in der maximalen Eingriffsstellung befinden, benachbart ist, wobei dieser Hohlraum (76) in der Axialrichtung der Walze (30, 31) länger als die Dicke eines Fleischmürbezahns (62, 64) ist, dadurch gekennzeichnet, daß jedes Zahnrad Getriebezähne (50, 52) aufweist, deren Schritt gleich dem Schritt der Fleischmürbezähne (62, 64) einer Ringreihe jeder Walze (30, 31) ist, so daß automatisch eine Längsreihe von Fleischmürbezähnen (62, 64) einer Walze (30, 31) in einer Linie mit einer Längsreihe von Fleischmürbezähnen (62, 64) der anderen Walze (30, 31) liegt, wenn diese Reihen in ihre maximale Eingriffsstellung gelangen.

2. Fleischmürbemaschine nach Anspruch 1, worin eine der Walzen eine Antriebswalze (30) und die andere eine angetriebene Walze (31) ist und die Antriebswalze an ihrem Ende einen Durchmesserschlitz (36) zur Aufnahme einer Antriebsachse mit flachem Ende aufweist.

3. Fleischmürbemaschine nach Anspruch 1, worin die Getriebezähne (50) einer der zwei Walzen (30) dicker als die Getriebezähne (52) der anderen Walze (31) sind und mit der ersten Ringreihe von Fleischmürbezähnen (64) dieser anderen Walze zusammenwirken, um als Fleischmürbezähne zu dienen.

4. Fleischmürbemaschine nach Anspruch 3, worin die Getriebezähne (50, 52) jeder der zwei Walzen (30, 31) in axialer Richtung der Walze mit den Fleischmürbezähnen (62, 64) der von den Getriebezähnen ausgehend zweiten Ringreihe der Walze ausgerichtet sind.

5. Fleischmürbemaschine nach Anspruch 4, worin die Enden jeder Walze (30, 31), welche den Zahnrädern (50, 52) gegenüber liegen, mit einem Ring (78, 80) versehen sind, von denen jeder den anderen an seinem Umfang berührt und die mit den Zahnrädern zusammenwirken, um das äußere Ende der auf die Achse der anderen Walze hin gerichteten Fleischmürbezähne (62, 64) in einem geringen Abstand von der Umfangsfläche (58, 60) dieser anderen Walze zu halten.

6. Fleischmürbemaschine nach Anspruch 5, worin eine der Walzen eine Antriebswalze (30) und die andere eine angetriebene Walze (31) ist und jede Walze an ihrem Ende mit einem zylindrischen Fortsatz (32, 34) versehen ist, der sich von den Zahnrädern bzw. den Ringen (78, 80) ausgehend nach außen erstreckt, wobei der Ring (78) der Antriebswalze einen kleineren Durchmesser als der Ring (80) der angetriebenen Walze hat, jeder Ring Umfangsberührung mit dem anderen Ring hat und der Ring der Antriebswalze der letzten Ringreihe von Fleischmürbezähnen (62) der Antriebswalze unmittelbar benachbart ist, während der Ring der angetriebenen Walze von der letzten Ringreihe von Fleischmürbezähnen (64) der angetriebenen Walze axial im Abstand eines freien Ringraums (72) angeordnet ist.

## Claims

1. A meat tendering machine for tendering pieces of meat, comprising a pair of cylindrical rollers (30, 31) of equal diameter which are disposed in side-by-side relationship and each include a gear on one end thereof, said gears having equal diameter and meshing with one another so that said two rollers (30, 31) rotate in opposition to each other than at equal speed, each roller (30, 31) being provided with similar meat tendering teeth (62, 64) of equal pitch projecting radially from the periphery (58, 60) of the roller (30, 31) substantially along the entire length thereof, wherein said meat tendering teeth (62, 64) are arranged in a plurality of annular rows and in each annular row said meat tendering teeth (62, 64) are separated by equal free spaces (66, 68) the bottom of which is defined by a part of the peripheral surface (58, 60), wherein said annular rows are disposed with a uniform spacing from each other in axial direction of said rollers (30, 31) so that they define free annular spaces (70, 72) therebetween, wherein the meat tendering teeth (62, 64) of each annular row of even or alternatively odd numbers of each roller (30, 31) are aligned relative to each other in axial direction of the roller (30, 31) and the meat tendering teeth (62, 64) of the each roller (30, 31) are disposed in zig-zag fashion such that said teeth of one annular row are always disposed in axial direction of the roller (30, 31) relative to the interspace (66, 68) of each adjacent annular row and engagement between said rollers (30, 31) is such that the meat tendering teeth (62, 64) of one roller (30, 31) are offset in longitudinal direction relative to the meat tendering teeth (62, 64) of the other roller (30, 31) so that in the position of maximum intermeshing of the rollers (30, 31) each meat tendering tooth (62, 64) of the longitudinal row of one roller (30, 31), which is in said maximum intermeshing position, occupies completely the opposite portion of a free annular space (70, 72) of the other roller so that said two meat tendering teeth (62, 64) form a pair of meat tendering teeth (62, 64) which are separated from the adjacent similarly formed pair of meat tendering teeth (62, 64) by a hollow space (76) defined by said free annular space (70, 72) which is adjacent the meat tendering teeth (62, 64) of the intermediate annular spaces which are not yet in the maximum intermeshing position, wherein said hollow space (76) in axial direction of the roller (30, 31) is longer than the thickness of a meat tendering tooth (62, 64), characterized in that each of said gear is formed with gear teeth (50, 52) whose pitch is equal to the pitch of said meat tendering teeth (62, 64) in an annular row of each roller (30, 31) so that a longitudinal row of meat tendering teeth (62, 64) of one roller (30, 31) will automatically be aligned with a longitudinal row of meat tendering teeth (62, 64) of the other roller (30, 31) when said rows reach their maximum intermeshing position.

2. A meat tendering machine as claimed in claim 1, wherein one of said rollers is a drive roller (30) and the other one is a driven roller (31) and wherein the drive roller is provided at its end with a slot (36) across the diameter thereof for receiving a flat-ended drive shaft.

3. A meat tendering machine as claimed in claim 1, wherein the gear teeth (50) of one (30) of said two rollers are thicker than the gear teeth (52) of the other roller (31) and cooperate with the first annular row of meat tendering teeth (64) to serve as meat tendering teeth.

4. A meat tendering machine as claimed in claim 3, wherein the gear teeth (50, 52) of each of said two rollers (30, 31) are aligned in axial direction of the roller with the meat tendering teeth (62, 64) of the second annular row of the roller starting from the gear teeth.

5. A meat tendering machine as claimed in claim 4, wherein the ends of each roller (30, 31) opposite to the gears (50, 52) are provided with a ring (78, 80), each of said rings contacting the periphery of the respective other ring and said rings cooperating with the gears in order to maintain the outer end of the meat tendering teeth (62, 64) directed towards the axis of the other roller at a slight spacing from the periphery (58, 60) of said other roller.

6. A meat tendering machine as claimed in claim 5, wherein one of said rollers is a drive roller (30) and the other one is a driven roller (31) and wherein the end of each roller is provided with a cylindrical extension (32, 34) extending outwardly from the gears or, respectively, the rings (78, 80), wherein the ring (78) of the drive roller is of smaller diameter than the ring (80) of the driven roller, each ring is in peripheral contact with the respective other ring, and the ring of the drive roller is directly adjacent the last annular row of meat tendering teeth (62) of the drive roller whereas the ring of the driven roller is mounted at an axial spacing from the last annular row of meat tendering teeth (64) of the driven roller corresponding to a free annular space (72).

*Fig. 1*

*Fig. 2*

1

Fig. 3

Fig. 9

Fig. 8

Fig. 5

Fig. 6

Fig. 4

Fig. 7